Europäisches Patentamt

European Patent Office

Office européen des brevets

(19)

(11) Publication number: **0 024 452**
**B1**

(12) **EUROPEAN PATENT SPECIFICATION**

(45) Date of publication of patent specification: **13.02.85**

(51) Int. Cl.⁴: **F 16 L 33/08**

(21) Application number: **79301658.5**

(22) Date of filing: **15.08.79**

(54) Clips, particularly for hoses.

| | |
|---|---|
| (43) Date of publication of application: **11.03.81 Bulletin 81/10** | (73) Proprietor: **Burnett-Johnston, Roy Lawrence 270 Carlton Road, Gidea Park Romford, Essex (GB)** |
| (45) Publication of the grant of the patent: **13.02.85 Bulletin 85/07** | (72) Inventor: **Burnett-Johnston, Roy Lawrence 270 Carlton Road, Gidea Park Romford, Essex (GB)** |
| (84) Designated Contracting States: **AT BE CH DE FR IT LU NL SE** | (74) Representative: **Mayes, Stuart David et al BOULT, WADE & TENNANT 27 Furnival Street London, EC4A 1PQ (GB)** |
| (56) References cited: **DE-A-1 675 186 DE-A-1 750 190 DE-B-1 269 433 DK-C- 75 957 FR-A-1 123 889 US-A-2 907 086 US-A-3 035 319 US-A-3 276 090** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to clips and especially to clips of the kind comprising a spiral strip, one end of the strip being secured to a housing, the other end of the strip passing through the housing, and a rotatable driving member mounted in the housing and engageable with teeth or thread portions in the strip so that rotation of the driving member in one direction causes the spiral to contract to grip anything placed within the spiral and rotation in the other direction causes the spiral to expand. Such clips are frequently used to secure hoses to rigid pipes.

In Patent Specification GB—A—1066782 there is described a clip of the above kind in which the driving member has a substantially flat face abutting the strip which face has a spiral tooth which engages projections on the strip. The tooth is so shaped that rotation of the driving member about an axis normal to the flat face causes expansion and contraction of the spiral.

It is an object of the present invention to provide an improvement of the clips described in specification GB—A—1066782 whereby the driving connection between the tooth and the strip may be released to allow rapid expansion and contraction of the spiral strip.

Another clip of the above kind is described in Specification DE—B—1269433. In this specification the driving member is disengageable from the strip but the movement of the member to provide this is perpendicular of the strip. This arrangement has the disadvantage of being weak in that forces generated by the tightened strip tend to push the driving member out of engagement with the strip.

The invention provides a clip as described above in which the driving member is slidably mounted in the housing for longitudinal movement relative to the strip between a first position in which the threads or teeth engage the teeth or thread portions of the strip, and a second position in which the threads or teeth are disengaged from the teeth or thread portions of the strip.

The driving member may have on its flat face a single spiral thread, in the manner of a scroll, with the strip passing over the centre of the face and abutting the face only on one side of the centre of the face.

Preferably the flat face is circular.

It is preferred that the faces of the teeth or threads of the driving member which are under load when the spiral is contracted are perpendicular to the said flat face, the other faces of the teeth being oblique to the said flat face.

It is further preferred that the strip has teeth of a complementary form. The free end of the strip may be arranged to engage a portion of the housing with the teeth of the strip acting in the manner of a ratchet to prevent expansion of the spiral unless the free end of the strip is first moved out of engagement with the said portion of the housing.

The teeth may be formed in the strip by pressing.

The strip may, for example, be of steel, stainless steel, Monel (Registered Trade Mark) metal or a plastics material.

The pitch of the thread or teeth on the driving member may lie within the range 1 T.P.I. (threads per inch to 36 T.P.I. (approx 0.7 to 25.4 mm per thread). A preferred pitch is 14 T.P.I. (approx 1.8 mm per thread).

The depth of the thread or teeth on the driving member may be within the range 0.005″ to 0.100″ (approx 0.127 to 2.54 mm). A preferred depth is 0.045″ (approx 1.14 mm) but depths of 0.060″ to 0.072″ (approx 1.52 and 1.83 mm) would also be particularly suitable.

By way of example, a specific embodiment of a clip according to the invention will now be described with reference to the accompanying drawings in which:—

Figure 1 is a side view of a clip embodying the invention;

Figure 2 is an enlarged plan view of one end of the strip of Figure 1 showing the housing in plan;

Figure 3 is an enlarged section through the clip of Figures 1 and 2; and

Figure 4 is an underplan of the driving member.

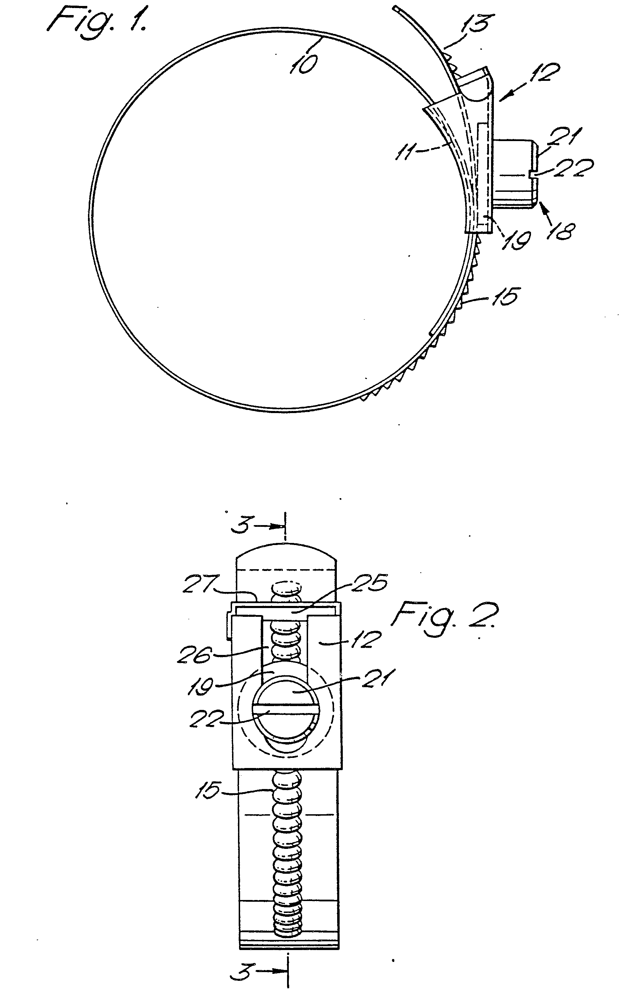

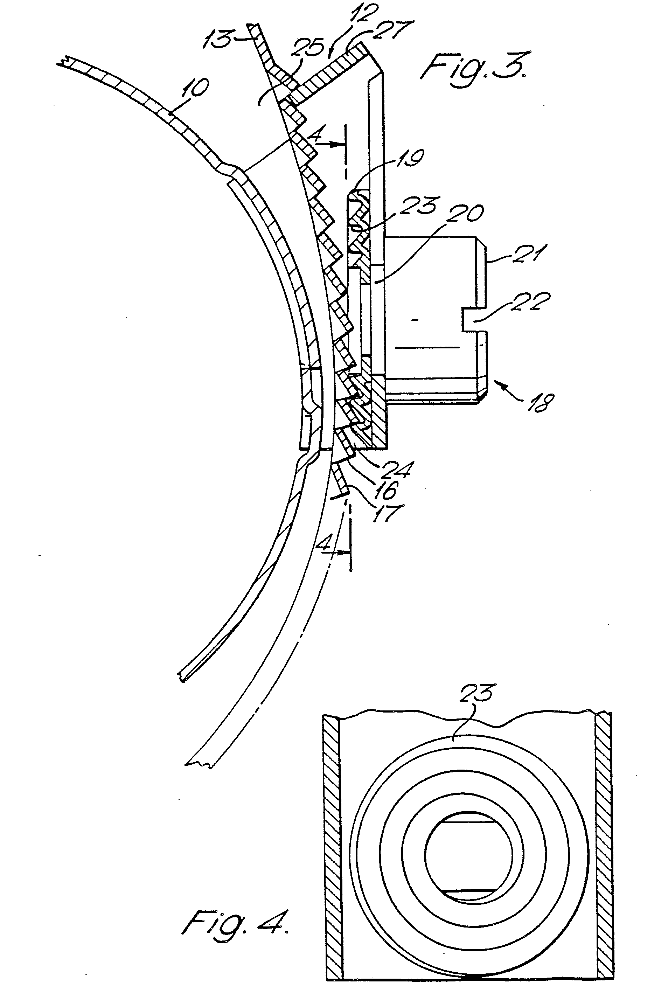

Referring to Figures 1 to 4 of the drawings, a clip according to the invention comprises a spiral steel strip 10 having one end portion 11 secured in a housing 12, the other end portion 13 passing slidably through the housing. On one face the strip 10 has a plurality of teeth or thread portions 15. These thread portions have a buttress form i.e., they have one substantially perpendicular face 16, the other face 17 being inclined (Figure 3). There are 14 threads per inch (approx 1.8 mm per thread) and the tooth depth is 0.045″ (approx 1.14 mm).

Also mounted within the housing is a driving member 18. Member 18 comprises a disc 19 to which is swaged a shaft 20. The shaft 20 has a head 21 having a screwdriver slot 22 therein. On the flat face of the disc 19 is a spiral thread (Figure 4) having the same form as the threads 15.

The housing 12 has openings 24 and 25 therein for the strip. It also has a slot open at one end which slot 26 receives the shaft 20 and has a 'wrap around' front face 27 which closes the open end of the slot 26 adjacent aperture 25.

The clip is assembled as shown in Figure 1, the end 11 of the strip being secured in the housing by two detents struck out of the strip material. The disc 19, by virtue of the slot 26 receiving the shaft 20, can be moved between the position shown in Figures 1 and 3 in which the threads 15 and 23 engage, and a position in which the disc lies at the upper part of the housing in which the disc lies at the upper part of the housing as viewed in Figures 1 and 3 the threads 15 and 23 being disengaged. While the strip 10 passes centrally over the disc 19 the projecting front face 27 of the housing ensures that the strip only engages the disc 19 on one side of the centre of the disc. The threads 15 of the strip engage the front face 27 in the same way that a ratchet member engages a pawl.

In use the disc 19 is moved to a position in which threads 15 and 23 are disengaged. End 13 of the strip 10 is then manually disengaged from the front face 27 of the housing by bending the end 13 towards the centre of the spiral and the end 13 can then be slid through the housing downwardly as viewed in Figures 1 and 3 to increase the diameter of the spiral. The spiral is then placed over the article which it is desired to clamp. This may for example be a piece of rubber hose which has been passed over a metal pipe. If necessary the end 13 of the strip may be removed completely from the housing so that the spiral can be wound round the hose rather than threaded over the hose.

The end 13 of the strip is then pulled back through the housing until the spiral closely embraces the article to be clamped. The disc 10 is then moved into the position shown in Figures 1 and 3 in which the threads 15 and 23 engage and the spiral can then be firmly tightened on to the article to be clamped by turning the disc through the medium of shaft 20 and screwdriver slot 22. The action of the vertical faces of the threads tends to hold the disc 19 in the position shown in Figure 1.

When it is desired to release the clip the disc 19 is given a few turns in a direction to slacken the spiral and once a little play has been obtained the disc 19 may be moved out of engagement with the strip 10 and the end 13 can be manually fed through the housing.

The teeth on the disc 19 may be produced by a pressing operation, which is a relatively inexpensive operation compared with machining. Furthermore by pressing the teeth on the strip 10 it is possible to produce a clip in which there is a greater contact area between the driving and driven members than in a clip of similar size employing a known screw. In known clips the slots or slots in the strip material are generally produced by hobbing. It is difficult or impossible to produce a hobbing tool having a diameter as small as the driving screw. The radius of the bottom of the slits or slots is therefore generally greater than the radius of the threads and the area of contact is reduced. With the arrangement according to the invention this problem is avoided. For any given size of clip the ratio of contact area in a clip according to the invention to contact area in a known clip may be of the order of 0.3287 to 0.2170.

Furthermore deeper teeth may be provided in the clip according to the invention and this, coupled with the improved contact area, makes it less necessary for the driving member to be tightly pressed against the strip by the housing. This feature makes the clip forming the subject of this example less prone to jamming should the threads become dirty or rusty, and facilitates movement of the disc 19 between the two positions mentioned above.

When the clip forming the subject of this example is in the tightened position the interengagement between the threads on the end 13 and the front face 27 on the housing provide an additional safeguard against slipping of the clip. This is particularly advantageous where the clip is to be used on an automobile or other machinery where vibration might cause undesirable rotation of the disc 19.

It is not necessary for the strip 10 to have teeth or threads along its entire length. In the above example the teeth extend for $1\frac{1}{2}''$ (approx 38.1 mm) along the end 13 only. The overall length of the strip is of the order of 4 or 5 inches (approx 102 or 127 mm).

The press forming of the teeth or threads on the strip 10 and disc 19 may work harden the working surfaces.

With the clip forming the subject of this example the load which will be applied to the clip by a screwdriver during tightening of the clip will be substantially radial. With some known clips the force applied is tangential. The clip therefore tends to slip away from the screwdriver by rotating about the centre of the spiral.

## Claims

1. A clip comprising a spiral strip (10), one end of the strip being secured to a housing (12), the other end of the strip passing through the housing, and a rotatable driving member (18) mounted in the housing and engageable with teeth or thread portions (15) on the strip so that rotation of the driving member in one direction causes the spiral to contact to grip anything placed within the spiral and rotation in the other direction causes the spiral to expand, in which the driving member has a substantially flat face abutting the strip, the flat face carrying teeth or threads (23) which are so shaped that they are engageable with the teeth or thread portions (15) of the strip so that rotation of the driving member about an axis normal to the flat face causes expansion and contraction of the spiral and characterised in that the driving member is slidably mounted in the housing for longitudinal movement relative to the strip between a first position in which the threads or teeth (23) engage the teeth or thread portions (15) of the strip (10), and a second position in which the threads or teeth are disengaged from the teeth or thread portions of the strip.

2. A clip as claimed in claim 1 characterised in that the driving member has on its flat face a single spiral thread, in the manner of a scroll, with the strip passing over the centre of the face and abutting the face only on one side of the centre of the face.

3. A clip as claimed in claim 1 or claim 2 characterised in that the faces of the teeth or threads of the driving member which are under load when the spiral is contracted are perpendicular to the said flat face, the other faces of these teeth being oblique to the said flat face.

4. A clip as claimed in any of claims 1 to 3, characterised in that the free end of the strip is arranged to engage a portion of the housing with the teeth of the strip acting in the manner of a ratchet to prevent expansion of the spiral unless the free end of the strip is first moved out of engagement with the said portion of the housing.

5. A clip as claimed in any of claims 1 to 4, characterised in that the pitch of the thread or teeth on the driving member lies within the range 1 T.P.I. to 36 T.P.I. (approx 0.7 to 25.4 mm per thread).

6. A clip as claimed in any of claims 1 to 5, characterised in that the depth of the thread or teeth on the driving member lies within the range 0.005" to 0.100" (approx 0.127 to 2.54 mm).

## Patentansprüche

1. Schelle mit einem spiralförmigen Streifen (10), dessen eines Ende an einem Gehäuse (12) befestigt ist und dessen anderes Ende durch das Gehäuse (12) hindurchläuft, und mit einem drehbaren Antriebselement (18), das in dem Gehäuse (12) befestigt und mit Zähnen oder Gewindeelementen (15) an dem Streifen (10) in Eingriff bringbar ist, so daß seine Drehung in der einen Richtung ein Zusammenziehen der Spiralform zum Greifen eines vom Streifen (10) umschlossenen Gegenstandes und in der anderen Richtung ein Dehnen der Spiralform zur Folge hat, wobei das Antriebselement (18) eine an dem Streifen (10) anliegende weitgehend eben Fläche hat, die mit Zähnen oder Gewindeelementen (23) eine solchen Form versehen ist, daß sie in die Zähne oder Gewindeelemente (15) des Streifens (10) eingreifen können, so daß eine Drehung des Antriebselements (18) um eine Achse normal zu der ebenen Fläche das Dehnen und Zusammenziehen der Spiralform verursacht, dadurch gekennzeichnet, daß das Antriebselement (18) in dem Gehäuse (12) zwecks Längsbewegung relativ zum Streifen (10) zwischen einer ersten Stellung, in der seine Gewindeelemente oder Zähne (23) in die Zähne oder Gewindeelemente (15) des Streifens (10) eingreifen, und einer zweiten Stellung, in der seine Gewindeelemente oder Zähne (23) von den Zähnen oder Gewindeelementen (15) des Streifens (10) getrennt sind, verschiebbar befestigt ist.

2. Schelle nach Anspruch 1, dadurch gekennzeichnet, daß das Antriebselement (18) an seiner ebenen Fläche ein einzelnes Spiralgewinde (23) nach Art einer Schnecke aufweist, wobei der Streifen (10) über die Mitte der Fläche läuft und an ihr nur auf einer Seite der Mitte anliegt.

3. Schelle nach Anspruch 1 oder 2, dadurch gekennzeichnet, daß die bei Zusammenziehen der Spiralform belasteten Flächen der Zähne oder Gewindeelemente (23) des Antriebselements (18) lotrecht und ihre übrigen Flächen geneigt zu der ebenen Fläche angeordnet sind.

4. Schelle nach einem der Ansprüche 1 bis 3, dadurch gekennzeichnet, daß das freie Ende des Streifens (10) so angeordnet ist, daß es auf einen Teil des Gehäuses (12) mit den Zähnen (15) nach Art einer Ratsche einwirkt, um das Dehnen der Spiralform zu verhindern, ohne daß das freie Ende außer Eingriff mit dem genannten Teil des Gehäuses (12) gebracht ist.

5. Schelle nach einem der Ansprüche 1 bis 4, dadurch gekennzeichnet, daß die Steigung der Gewindeelemente oder Zähne (23) an dem Antriebselement (18) im Bereich von 1 T.P.I. bis 36 T.P.I. (ca. 25,4 bis 0,7 mm pro Gewindegang) liegt.

6. Schelle nach einem der Ansprüche 1 bis 5, dadurch gekennzeichnet, daß die Tiefe der Gewindeelemente oder Zähne (23) des Antriebselements im Bereich von 0,005 Inch bis 0,100 Inch (ca. 0,127 bis 2,54 mm) liegt.

## Revendications

1. Collier de serrage comportant un ruban spiral (10) done une extrémité est fixée à un logement (12) et dont l'autre extrémité s'étend à travers ce logement, et un organe d'entraînement rotatif (18) monté dans le logement pouvant engrener avec des dents ou des parties filetées (15) situées sur le ruban de sorte que la rotation de l'organe d'entraînement dans un sens provoque la contraction du ruban spiral de manière qu'il serre tout élément placé en son intérieur, et que la rotation dans le sens opposé provoque une extension du ruban spiral, et dans lequel l'organe d'entraînement possède une face essentiellement plane appliquée contre le ruban, cette face plant portant des dents ou des filets (23) qui sont conformés de telle manière qu'ils peuvent engrener avec les dents ou les parties filetées (15) du ruban de telle sorte qu'une rotation de l'organe d'entraînement autour d'un axe perpendiculaire à la face plane provoque l'extension et la contraction du ruban spiral, et caractérisé en ce que l'organe d'entraînement est monté de façon à pouvour coulisser dans le logement de manière à avoir un déplacement longitudinal par rapport au ruban entre une première position, dans laquelle les filets ou les dents (23) engrènent avec les dents ou les parties filetées (15) du ruban (10), et une seconde position dans laquelle les filets ou les dents sont dégagés des dents ou des parties filetées du ruban.

2. Collier de serrage tel que revendiqué dans la revendication 1, caractérisé en ce que l'organe d'entraînement possède, sur sa face plane, un filet spiral unique, réalisé à la manière d'une volute, le ruban passant au-dessus du centre de la face et étant en aboutement contre la face uniquement d'une côté par rapport au centre de la face.

3. Collier de serrage tel que revendique dans la revendication 1 ou la revendication 2, caractérisé en ce que les faces des dents ou des filets de l'organe d'entraînement, qui sont placés sous charge lorsque le ruban spiral est contracté, sont perpendiculaires à ladite face plane, les autres faces de ces dents sont obliques par rapport, à ladite face plane.

4. Collier de serrage tel que revendiaqué selon l'une quelconque des revendications 1 à 3, caractérisé en ce que l'extrémité libre du ruban est agencée de manière à engrener avec une partie du boîtier, les dents du ruban agissant à la manière d'une roue à rochet afin d'empêcher l'extension du ruban spiral à moins que l'extrémité libre de ce dernier soit tout d'abord dégagée de son engrènement avec ladite partie du boîtier.

5. Collier de serrage tel que revendiqué selon l'une quelconque des revendications 1 à 4, caractérisé en ce que le pas du filet ou des dents sur l'organe d'entraînement se situe dans la gamme allant de 1 à 36 dents ou filets par pouce (environ 0,04 à 1,42 dent ou filet par mm).

6. Collier de serrage tel que revendiquè selon l'une quelconque des revendications 1 à 5, caractérisé en ce que la profondeur du filet ou des dents sur l'organe d'entraînement se situe dans la gamme allant de 0,005″ à 0,100″ (environ de 0,127 à 2,54 mm).

Fig. 1.

0 024 452

Fig. 2.

1

Fig. 3.

Fig. 4.